# EUROPÄISCHE PATENTSCHRIFT

(11) **EP 3 473 396 B1**
(45) Veröffentlichungstag und Bekanntmachung des Hinweises auf die Patenterteilung: **16.06.2021**
(21) Anmeldenummer: 18170206.9
(22) Anmeldetag: 30.04.2018
(51) Int. Cl.: B29B 7/42, B29C 48/45, B29C 48/565, B29C 48/685

(54) **ASYMMETRISCHE ZWEIFLÜGLIGE SCHNECKENWELLE FÜR EINE MISCH- UND KNETMASCHINE**
ASYMMETRIC TWO-BLADE SCREW-TYPE SHAFT FOR A MIXING AND KNEADING MACHINE
ARBRE DE VIS SANS FIN ASYMÉTRIQUE, À DEUX AILETTES, POUR UNE MACHINE DE MÉLANGE ET DE MALAXAGE

(30) Priorität: 17.10.2017 EP 17196908; 19.01.2018 EP 18152448
(43) Veröffentlichungstag der Anmeldung: 24.04.2019
(73) Patentinhaber: Buss AG, 4133 Pratteln (CH)
(72) Erfinder: SCHÖTZAU, Martin, 4302 Augst (CH); WALTER, Wolfgang, 73434 Aalen (DE)
(74) Vertreter: Henkel & Partner mbB

(56) Entgegenhaltungen:
- EP-A1- 1 247 454
- EP-A2- 0 140 846
- DE-A1- 2 307 616
- DE-A1- 3 132 429
- DE-T2- 60 100 970
- DE-T2- 69 212 748
- US-A- 3 938 783

## Beschreibung

Die vorliegende Erfindung betrifft eine Schneckenwelle für eine Misch- und Knetmaschine insbesondere für kontinuierliche Aufbereitungsprozesse, ein eine solche Schneckenwelle umfassendes Gehäuse sowie eine ein solches Gehäuse umfassende Misch- und Knetmaschine für kontinuierliche Aufbereitungsprozesse.

Derartige Misch- und Knetmaschinen mit derartigen Schneckenwellen werden insbesondere zum Aufbereiten von plastischen und/oder pastösen Massen eingesetzt. Beispielsweise dienen sie dem Verarbeiten von zähplastischen Massen, dem Homogenisieren und Plastifizieren von Kunststoffen, Gummi und dergleichen, dem Einarbeiten von Füll- und Verstärkungsstoffen sowie dem Herstellen von Ausgangsmaterialien für die Lebensmittelindustrie. Die Schneckenwelle bildet hierbei das Arbeitsorgan, welches das zu verarbeitende Material in axialer Richtung vorwärts transportiert bzw. fördert und dabei die Komponenten des Materials miteinander vermischt.

Derartige Misch- und Knetmaschinen eignen sich insbesondere auch zum Herstellen von Polymergranulat, Polymerstrangpressprofilen, Polymerformteilen und dergleichen. Dabei wird in der Misch- und Knetmaschine eine homogene Polymerschmelze erzeugt, welche dann beispielsweise in eine Austragsvorrichtung und von dieser zu beispielsweise einer Granulationsvorrichtung, einem Schacht, einem Förderband oder dergleichen gefördert wird.

Solche Misch- und Knetmaschinen sind beispielsweise aus der CH 278 575 A sowie aus der CH 464 656 bekannt.

Bei diesen Misch- und Knetmaschinen führt die Schneckenwelle vorzugsweise nicht nur eine rotative Bewegung aus, sondern bewegt sich gleichzeitig auch in der axialen Richtung, d.h. in der Längsrichtung der Schneckenwelle, translatorisch vor und zurück. Der Bewegungsablauf zeichnet sich daher vorzugsweise dadurch aus, dass die Schneckenwelle - in der axialen Richtung gesehen - eine der Rotation überlagerte oszillatorische Bewegung ausführt. Dieser Bewegungsablauf ermöglicht das Einbringen von Einbauten, nämlich von Knetelementen, wie von Knetbolzen oder von Knetzähnen, in das Gehäuse der Misch- und Knetmaschine. Wegen des Vorhandenseins der Knetelemente verläuft die auf der Hauptwelle, dem sogenannten Wellenstab, angeordnete Schnecke nicht - im Querschnitt des Wellenstabs gesehen - durchgehend, sondern ist in eine Mehrzahl von einzelnen Flügelelementen unterteilt, die sich jeweils über einen bestimmten Winkelabschnitt des Querschnittsumfangs des Wellenstabes erstrecken. Benachbarte Flügelelemente sind voneinander sowohl in axialer Richtung als auch in der Außenumfangsrichtung des Wellenstabes beabstandet, d.h. zwischen benachbarten Flügelelementen ist sowohl in axialer Richtung als auch in der Außenumfangsrichtung des Wellenstabes jeweils ein Spalt vorgesehen. Wenn beispielsweise der gesamte Wellenstab der Schneckenwelle oder ein axialer Abschnitt des Wellenstabs der Schneckenwelle, im Querschnitt des Wellenstabs gesehen, drei Flügelelemente umfasst, welche sich jeweils über einen Winkelabschnitt von zum Beispiel 100° des Querschnittsumfangs des Wellenstabs erstrecken, spricht man von einer dreiflügligen Schneckenwelle bzw. von einem dreiflügligen Schneckenwellenabschnitt, wenn sich diese Flügelelementanordnung nicht über die gesamte axiale Länge des Wellenstabes, sondern nur über einen Abschnitt hiervon erstreckt. Die Rotation und die translatorische Bewegung der Schneckenwelle in axialer Richtung werden so gesteuert, dass die einzelnen Flügelelemente bei der Rotation und der translatorischen Bewegung mit ihren Flanken in die Nähe der entsprechenden Knetelemente gelangen, um das zu mischende und knetende Material zu verdichten und eine Scherwirkung auf dieses auszuüben, um so den Mischungs- und/oder Knetvorgang zu befördern, ohne dass die Knetelemente mit den Flügelelementen kollidieren. Ferner verhindern die Knetelemente, weil sie den Flanken der Flügelelemente bei der Rotation und der translatorischen Bewegung der Schneckenwelle nahekommen, dass sich auf den Flanken der Flügelelemente Ablagerungen von Komponenten der Mischung ausbilden, so dass die Knetelemente im Ergebnis auch eine Reinigung der Flügelelemente bewirken. Natürlich müssen die Anzahl und die Geometrie der Flügelelemente an die Anzahl der Knetelemente angepasst werden. Üblicherweise sind die einzelnen Knetelemente an der Innenumfangsfläche des Gehäuses der Misch- und Knetmaschine- in der axialen Richtung - in mehreren, auf die Geometrie und Anzahl der Flügelelemente abgestimmten und sich über zumindest einen axialen Abschnitt der Innenumfangsfläche des Gehäuses erstreckenden Reihen von axial beabstandeten Knetelementen angeordnet. Sind auf der Innenumfangsfläche des Gehäuses beispielsweise vier sich axial erstreckende Reihen von Knetelementen angeordnet, kann die Schneckenwelle auf deren Außenumfangsfläche beispielsweise - im Querschnitt gesehen - vier Flügelelemente aufweisen, zwischen denen jeweils ein genügend breiter Abstand vorsehen ist, damit sich die Knetelemente bei der Rotation und axialen Bewegung der Schneckenwelle durch diese Abstände hindurchbewegen können.

Häufig sind die beschriebenen Misch- und Knetmaschinen in axialer Richtung in verschiedene Verfahrensabschnitte unterteilt, wobei jeder Verfahrensabschnitt gemäß seiner während des Betriebs zugeordneten Aufgabe mit einer entsprechenden Anzahl bzw. Geometrie an Flügelelementen und Knetelementen besetzt ist. Beispielsweise umfasst eine Misch- und Knetmaschinen in axialer Richtung, je nach zu mischendem Material, einen am stromaufwärtigen Ende liegenden Einzugsabschnitt, in dem die zu mischenden bzw. zu knetenden Bestandteile in die Maschine eingebracht werden, einen sich daran stromabwärts anschließenden Schmelzabschnitt, in dem die Bestandteile geschmolzen werden, einen Misch- und Dispergierabschnitt, in dem etwaige Aggregate der Bestandteile des Materials zerkleinert sowie möglichst homogen miteinander vermischt werden, und einen Entgasungsabschnitt, in dem die Mischung entgast wird. Es ist bereits vorgeschlagen worden, in einzelnen Verfahrensabschnitten der Misch- und Knetmaschine eine andere Anzahl von Knetelementen und daran angepasst andere Flügelelemente vorzusehen als in anderen Verfahrensabschnitten, um so die Verhältnisse in den einzelnen Verfahrensabschnitten an die Erfordernisse der verschiedenen Verfahrensabschnitte anzupassen. Beispielsweise ist es bekannt, die Schneckenwelle einer Misch- und Knetmaschine abschnittsweise dreiflüglig und abschnittsweise vierflüglig auszugestalten und entsprechend dazu korrespondierende Verfahrensabschnitte der Gehäuseinnenwand der Misch- und Knetmaschine mit drei bzw. vier Reihen von Knetelementen auszustatten. Dies kann dadurch realisiert werden, dass das Gehäuse in mehrere Gehäuseschalen unterteilt ist, von denen einige drei Reihen von Knetelemente und andere vier Reihen von Knetelemente aufweisen.

In der US 3,938,783 wird eine Vorrichtung zum Vermischen flüssiger Reaktanden insbesondere zur Herstellung von Urethanschaum beschrieben, welche eine Schneckenwelle umfasst, welche abschnittsweise vierflüglig und abschnittsweise achtflüglig ausgestaltet ist.

Aus der EP 0 140 846 A2 ist eine Vorrichtung zur Vermischung von Kunststoffmaterialien bekannt, welche eine Schneckenwelle umfasst, welche abschnittsweise dreiflüglig ausgestaltet ist.

Allerdings weisen die bisher bekannten Misch- und Knetmaschinen der vorgenannten Art, in denen beispielsweise eine dreiflüglige Schneckenwelle, eine vierflüglige Schneckenwelle oder eine Schneckenwelle, welche abschnittsweise dreiflüglig und abschnittsweise vierflüglig ausgestaltet ist, vorgesehen ist, den Nachteil auf, dass diese einen oder mehrere sogenannte Stauringe benötigen, um eine wirksame Plastifizierung des Fördergutes in der Förderrichtung der Schneckenwelle sicherzustellen. Dies liegt daran, dass bei schwer zu plastifizierenden Materialien ansonsten unplastifiziertes Material die Misch- und Knetmaschine passieren kann. Bei einem Stauring handelt es sich um einen sinusförmigen Vorsprung an der Innenumfangsfläche des Gehäuses der zu einer abschnittsweisen Verengung des durch die Gehäuseinnenwand ausgebildeten hohlen Innenraums führt. Mithin handelt es sich bei einem Stauring um eine sich von der Innenumfangsfläche des Gehäuses über einen kleinen axialen Abschnitt hinweg, radial in den hohlen Innenraum hinein erstreckende Schikane, welche in dem hohlen Innenraum einen geeigneten Rückstau einstellt bis das Material soweit plastifiziert ist, dass es die Schikane passieren kann. An der Stelle der Stauringe können jedoch keine Flügelelemente und keine Knetelemente angeordnet werden, da diese dort kollidieren würden, weswegen sich an diesen Stellen leicht Ablagerungen ansammeln, die aufgrund der fehlenden Selbstreinigung nur schwer aus der Misch- und Knetmaschine zu entfernen sind.

Aufgabe der vorliegenden Erfindung ist es daher, die vorgenannten Nachteile zu überwinden und eine Schneckenwelle für eine Misch- und Knetmaschine bereitzustellen, welche es erlaubt, in dem Gehäuse der Misch- und Knetmaschine auf das Vorsehen von verschleißanfälligen Stauringen zu verzichten.

Erfindungsgemäß wird diese Aufgabe durch eine Schneckenwelle gemäss Anspruch 1 für eine Misch- und Knetmaschine insbesondere für kontinuierliche Aufbereitungsprozesse gelöst, welche einen Wellenstab mit einem kreisförmigen Querschnitt aufweist, auf dessen Umfangsfläche voneinander beabstandete, sich von der Umfangsfläche des Wellenstabes nach außen erstreckende Flügelelemente angeordnet sind, wobei die Flügelelemente auf der Umfangsfläche des Wellenstabes, zumindest in einem sich in der axialen Richtung der Schneckenwelle erstreckenden Abschnitt, in zwei sich in der axialen Richtung der Schneckenwelle erstreckenden Reihen angeordnet sind, dadurch gekennzeichnet, dass dieser sich in der axialen Richtung der Schneckenwelle erstreckende Abschnitt, außer den in den zwei Reihen angeordneten Flügelelementen, keine weiteren Flügelelemente umfasst, sich jedes der Flügelelemente (22, 22', 22", 22"') dieses sich in der axialen Richtung der Schneckenwelle (12) erstreckenden Abschnitts - im Querschnitt des Wellenstabes (20) gesehen - über einen Winkelabstand 20° bis 160° oder von mindestens 160° erstreckt, und dass der sich in der axialen Richtung erstreckende Abschnitt der Schneckenwelle, in dem sich jedes der Flügelelemente über den vorgenannten Winkelabstand der Umfangsfläche des Wellenstabes erstreckt, mindestens 0,2 D der Länge der Schneckenwelle beträgt, wobei D der Durchmesser der Schneckenwelle (12) ist.

Diese Lösung beruht auf der Erkenntnis, dass sowohl die Verschleißbeständigkeit der Flügelelemente als auch die - pro Zeiteinheit und bezogen auf den Schneckenwellendurchmesser - in der Längsrichtung förderbare Menge an Mischung vergrößert werden kann, wenn die Schneckenwelle zumindest abschnittsweise anstelle der Stauringe zweiflüglig ausgestaltet ist. Dies liegt daran, dass bei einem zweiflügligen Schneckenwellenabschnitt der Transport nach vorne durch den Hub der Misch- und Knetmaschine bewerkstelligt wird, wohingegen ein Stauring immer einen Rückstau bewirkt, also die Förderwirkung praktisch null ist. Aufgrund der Breite der Flügelelemente sind diese weniger verschleißanfällig als ein Stauring bzw. Flügelelemente von drei- bzw. vierflügligen Schneckenwellenabschnitten. Schließlich erlauben es zweiflüglige Schneckenwellenabschnitte bei entsprechender Ausgestaltung der Flügelelemente, auf den Einsatz von Stauringen an der Innenumfangsfläche des Gehäuses zu verzichten, weil die entsprechend ausgestalteten Flügelelemente im Zusammenspiel mit den im Gehäuse angebrachten Knetelementen die Plastifizierung der Mischung übernehmen und zudem noch wesentlich schonender für die Mischung sind als Stauringe.

Erfindungsgemäß weist die Schneckenwelle auf der Umfangsfläche des Wellenstabes sich nach außen erstreckende Flügelelemente auf, welche auf der Umfangsfläche des Wellenstabes, zumindest in einem sich in der axialen Richtung der Schneckenwelle erstreckenden Abschnitt, in zwei sich in der axialen Richtung der Schneckenwelle erstreckenden Reihen angeordnet sind. Mithin betrifft die vorliegende Erfindung eine Schneckenwelle, welche zumindest abschnittsweise zweiflüglig ausgestaltet ist, d.h. eine Schneckenwelle, deren Umfangsfläche, d.h. deren Mantelfläche, im Querschnitt des Wellenstabes gesehen, zwei Flügelelemente umfasst, wobei in der axialen Richtung der Schneckenwelle benachbarte, beabstandete Flügelelemente jeweils eine Reihe ausbilden. Dieser zweiflüglige Abschnitt umfasst - außer den in den beiden Reihen angeordneten Flügelelementen - keine weiteren Flügelelemente, also auch nicht einzelne, zwischen diesen Reihen angeordnete Flügelelemente. Dabei wird unter einer sich in der axialen Richtung der Schneckenwelle über zumindest einen Abschnitt der (Außen)umfangsfläche des Wellenstabes erstreckenden Reihe von Flügelelementen im Sinne der vorliegenden Erfindung verstanden, dass eine über die Mittelpunkte voneinander in axialer Richtung beabstandeter Flügelelemente einer Reihe gelegte Verbindungslinie zumindest im Wesentlichen eine Gerade ist, wobei die maximale Abweichung der Verbindungslinie von einer Gerade weniger als 10°, bevorzugt weniger als 5° und weiter bevorzugt weniger als 2° beträgt. Unter Mittelpunkt eines Flügelelements wird dabei der Punkt verstanden, der in der Mitte der Länge des Flügelelements liegt, wobei die Länge die längste Erstreckung bzw. Längserstreckung der Außenumfangsfläche des Flügelelements ist, also die längste mögliche Gerade zwischen zwei verschiedenen Punkten auf der Außenumfangsfläche des Flügelelements.

Wie dargelegt, sind die Flügelelemente auf der Umfangsfläche des Wellenstabes zumindest in einem sich in der axialen Richtung der Schneckenwelle erstreckenden Abschnitt, in zwei Reihen angeordnet. Die anderen axialen Abschnitte der Schneckenwelle können anders ausgestaltet sein, nämlich beispielsweise dreiflüglig, vierflüglig oder abwechselnd drei- und vierflüglig. Die Schneckenwelle gemäß der vorliegenden Erfindung kann auch zwei, drei oder mehrere zweiflüglige Abschnitte umfassen, die voneinander jeweils durch ein oder mehrere andere Abschnitte getrennt sind, wobei diese ein oder mehrere andere Abschnitte wiederum dreiflüglig, vierflüglig oder abwechselnd drei- und vierflüglig ausgestaltet sein können.

Wie bei den in Rede stehenden Misch- und Knetmaschinen üblich, weist der Wellenstab der erfindungsgemäßen Schneckenwelle einen kreisförmigen Querschnitt auf, wobei sich die einzelnen Flügelelemente von der Umfangsfläche des Wellenstabes radial nach außen erstrecken.

Dabei ist die vorliegende Erfindung bezüglich der Art der Herstellung der Schneckenwelle nicht beschränkt. Beispielsweise kann die Schneckenwelle durch Fräsen eines Metallzylinders zur Ausbildung der Flügelelemente hergestellt werden oder durch Schweißen von Flügelelementen auf einen Wellenstab. Praktischerweise wird die Schneckenwelle jedoch hergestellt, indem einzelne Schneckenwellenabschnitte auf einen Basisstab aufgesteckt werden, wobei jeder Schneckenwellenabschnitt beispielsweise zwei Reihen aus jeweils 1 bis 4 benachbarten Flügelelementen umfasst.

Vorzugsweise liegen sich die Flügelelemente der beiden in der axialen Richtung der Schneckenwelle erstreckenden Reihen der Flügelelemente auf der Umfangsfläche des Wellenstabes - im Querschnitt des Wellenstabes gesehenen - gegenüber. Unter Gegenüberliegen wird hierbei verstanden, dass die Mittelpunkte beider in der Umfangsrichtung des Wellenstabes benachbarter Flügelelemente auf der Umfangsfläche des Wellenstabes um 180° verschoben sind. Zudem sind die sich gegenüberliegenden Flügelelemente, wie weiter unten dargestellt, vorzugsweise auch axialer Richtung versetzt.

Um eine gute Förderung der zu fördernden Mischung in der Förderrichtung zu ergeben, ist es zudem bevorzugt, dass jedes der Flügelelemente des zumindest einen sich in der axialen Richtung der Schneckenwelle erstreckenden zweiflügligen Abschnitts eine Längserstreckung aufweist, welche sich zumindest im Wesentlichen senkrecht zu der Längsrichtung der Schneckenwelle, d.h. parallel zu der Umfangsrichtung der Schneckenwelle erstreckt. Unter einer zumindest im Wesentlichen senkrechten Erstreckung zu der Längsrichtung der Schneckenwelle wird dabei verstanden, dass sich die Längserstreckungen der Flügelelemente in einem Winkel von 45° bis 135°, bevorzugt von 60° bis 120°, besonders bevorzugt von 80° bis 100°, ganz besonders bevorzugt von 85° bis 95° und höchst bevorzugt von etwa 90° zu der axialen Richtung der Schneckenwelle erstrecken.

Im Hinblick sowohl auf die erzielte Fördermenge der zu fördernden Mischung - pro Zeiteinheit und bezogen auf den Schneckenwellendurchmesser -, auf die Verschleißbeständigkeit der Flügelelemente und die Erzielung einer gewünschten Plastifizierung wird es in Weiterbildung des Erfindungsgedankens vorgeschlagen, dass jedes der Flügelelemente des zumindest einen sich in der axialen Richtung der Schneckenwelle erstreckenden zweiflügligen Abschnitts eine, in Draufsicht, elliptische, ovale oder bikonvexe Außenumfangsfläche aufweist. Gemäß der vorliegenden Erfindung erstreckt sich der zumindest eine zweiflüglige Abschnitt der Schneckenwelle über mindestens 0,2 D (d.h. mindestens über eine 20% des Durchmessers entsprechende Strecke), bevorzugt mindestens 0,5 D (d.h. mindestens über eine 50% des Durchmessers entsprechende Strecke), besonders bevorzugt mindestens 1 D (d.h. mindestens über eine dem Durchmesser entsprechende Strecke) und ganz besonders bevorzugt mindestens 10 D (d.h. mindestens über eine dem 10-fachen Durchmesser entsprechende Strecke) der Länge der Schneckenwelle. Insbesondere bei dieser Ausführungsform der vorliegenden Erfindung ist es bevorzugt, dass sich die Längserstreckungen der Flügelelemente zumindest im Wesentlichen senkrecht zu der Längsrichtung der Schneckenwelle erstrecken, wobei im Wesentlichen senkrecht wie vorstehend definiert ist. Alternativ dazu können, auch wenn dies weniger bevorzugt ist, nicht alle, sondern mindestens 50%, bevorzugt mindestens 80% und weiter bevorzugt mindestens 90% aller Flügelelemente eine so geformte Außenumfangsfläche aufweisen.

Vorzugsweise ist die Schneckenwelle gemäß der vorliegenden Erfindung in Bezug auf die Flügelelemente symmetrisch ausgestaltet. Darunter wird verstanden, dass sich die Flügelelemente der beiden in der axialen Richtung der Schneckenwelle erstreckenden Reihen der Flügelelemente gegenüberliegen und zudem die Flügelelemente im Hinblick auf deren Geometrie und Abmessungen zumindest im Wesentlichen gleich sind, d. h., dass sich deren Abmessungen um maximal 10%, bevorzugt um maximal 5%, besonders bevorzugt um maximal 2%, insbesondere bevorzugt um maximal 1%, ganz besonders bevorzugt um maximal 0,5% und höchst bevorzugt gar nicht unterscheiden. Demnach ist es bevorzugt, dass jedes der Flügelelemente des zumindest einen zweiflügligen Abschnitts der Schneckenwelle die gleiche elliptische, ovale oder bikonvexe Außenumfangsfläche aufweist. Alternativ dazu können, auch wenn dies weniger bevorzugt ist, nicht alle, sondern mindestens 50%, bevorzugt mindestens 80% und weiter bevorzugt mindestens 90% aller Flügelelemente symmetrisch ausgestaltet sein.

Gute Ergebnisse werden insbesondere erzielt, wenn jedes der Flügelelemente des zumindest einen zweiflügligen Abschnitts der Schneckenwelle eine bikonvexe Außenumfangsfläche aufweist, wobei die bikonvexe Außenumfangsfläche besonders bevorzugt ein Verhältnis von Länge L zu Breite B von 3 bis 11 aufweist. Dabei ist die Länge L der Außenumfangsfläche eines Flügelelements in diesem Zusammenhang, wie vorstehend dargelegt, die längste gerade Erstreckung der Außenumfangsfläche des Flügelelements. Zudem ist die Breite B der Außenumfangsfläche eines Flügelelements in diesem Zusammenhang die längste gerade Erstreckung der Außenumfangsfläche des Flügelelements, welche sich senkrecht zu der Länge des Flügelelements erstreckt. In Weiterbildung des Erfindungsgedankens wird es vorgeschlagen, dass das Verhältnis von Länge L zu Breite B der Außenumfangsfläche der Flügelelemente des zumindest einen zweiflügligen Abschnitts der Schneckenwelle 4 bis 10, besonders bevorzugt 5 bis 9, ganz besonders bevorzugt 6 bis 8 und höchst bevorzugt 7 bis 7,5 beträgt. Alternativ dazu können, auch wenn dies weniger bevorzugt ist, nicht alle, sondern mindestens 50%, bevorzugt mindestens 80% und weiter bevorzugt mindestens 90% aller Flügelelemente die vorgenannte Geometrie aufweisen.

Grundsätzlich ist die vorliegende Erfindung bezüglich der Ausbildung der Flanken der Flügelelemente des zumindest einen zweiflügligen Abschnitts der Schneckenwelle nicht beschränkt. Die seitlichen Flanken der Flügelelemente können sich daher von der Umfangsrichtung des Wellenstabes zu der Außenumfangsfläche der Flügelelemente senkrecht nach oben erstrecken. Allerdings ist es im Hinblick auf eine - pro Zeiteinheit und bezogen auf den Schneckenwellendurchmesser - bezüglich der Menge an in der Längsrichtung geförderter Mischung verbesserte Förderleistung bevorzugt, dass die sich seitlichen Flanken der Flügelelemente von der Umfangsrichtung des Wellenstabes zu der Außenumfangsfläche der Flügelelemente nicht senkrecht nach oben erstrecken, sondern gewinkelt. Gemäß einer besonders bevorzugten Ausführungsform der vorliegenden Erfindung ist es daher vorgesehen, dass sich die seitlichen Flanken jedes der Flügelelemente des zumindest einen zweiflügligen Abschnitts der Schneckenwelle in einem Winkel α von 1° bis 60°, bevorzugt von 2° bis 40°, besonders bevorzugt von 3° bis 20° und ganz besonders bevorzugt von 4° bis 10° bezogen auf die Querschnittsebene des Wellenstabes nach oben zu der Außenumfangsfläche der Flügelelemente erstrecken. Alternativ dazu können, auch wenn dies weniger bevorzugt ist, nicht alle, sondern mindestens 50%, bevorzugt mindestens 80% und weiter bevorzugt mindestens 90% aller Flügelelemente Flanken aufweisen, die sich in dem vorgenannten Winkel von der Umfangsfläche des Wellenstabes nach außen erstrecken.

Sowohl im Hinblick auf die Verschleißbeständigkeit der Flügelelemente als auch im Hinblick auf die Förderleistung wird es in Weiterbildung des Erfindungsgedankens vorgeschlagen, dass das Verhältnis des axialen Abstandes A zweier benachbarter Flügelelemente einer Reihe zu der Breite B eines Flügelelements 0,5 bis 7 beträgt. Dabei ist die Breite B des Flügelelements wie vorstehend definiert und ist der axiale Abstand A zweier axial benachbarter Flügelelemente der Abstand zwischen den Mittelpunkten der Außenumfangsflächen der axial benachbarten Flügelelemente, wobei der Mittelpunkt der Außenumfangsfläche eines Flügelelements wie vorstehend definiert ist. Vorzugsweise beträgt das Verhältnis des axialen Abstandes A zweier benachbarter Flügelelemente einer Reihe zu der Breite B eines Flügelelements 0,75 bis 3, besonders bevorzugt 1,0 bis 2,0, ganz besonders bevorzugt 1,25 bis 1,75 und höchst bevorzugt 1,4 bis 1,6. Alternativ dazu können, auch wenn dies weniger bevorzugt ist, nicht alle, sondern mindestens 50%, bevorzugt mindestens 90% und weiter bevorzugt mindestens 80% aller Flügelelemente das vorgenannte Verhältnis aufweisen.

Gemäß einer weiteren ganz besonders bevorzugten Ausführungsform der vorliegenden Erfindung ist es vorgesehen, dass sich jedes der Flügelelemente des zumindest einen zweiflügligen Abschnitts der Schneckenwelle - im Querschnitt des Wellenstabes gesehen - über einen Winkelabstand von mindestens 170°, insbesondere bevorzugt von mindestens 175°, noch weiter bevorzugt von mindestens oder mehr als 180°, noch weiter bevorzugt von mehr als 180° bis 270°, noch weiter bevorzugt von 185° bis 230°, insbesondere bevorzugt von 185° bis 210°, ganz besonders bevorzugt von 190° bis 200° und höchst bevorzugt von 192° bis 197°, wie insbesondere von etwa 195°, der Umfangsfläche des Wellenstabes. Erfindungsgemäss erstreckt sich der zumindest eine zweiflüglige Abschnitt der Schneckenwelle über mindestens 0,2 D, bevorzugt mindestens 0,5 D, besonders bevorzugt mindestens 1 D und ganz besonders bevorzugt mindestens 10 D der Länge der Schneckenwelle.

Auch bei dieser Ausführungsform der vorliegenden Erfindung ist es besonders bevorzugt, dass sich die Längserstreckungen der Flügelelemente im Wesentlichen senkrecht zu der Längsrichtung der Schneckenwelle erstrecken, wobei im Wesentlichen senkrecht wie vorstehend definiert ist. Alternativ dazu können sich, auch wenn dies weniger bevorzugt ist, nicht alle, sondern mindestens 50%, bevorzugt mindestens 80% und weiter bevorzugt mindestens 90% aller Flügelelemente über den vorgenannten Winkelabstand des Wellenstabes erstrecken.

Bei der vorstehenden Ausführungsform ist es ganz besonders bevorzugt, dass sich alle Flügelelemente über zumindest im Wesentlichen den gleichen Winkelabschnitt der Umfangsfläche des Wellenstabes erstrecken und vorzugsweise sich die Flügelelemente der beiden in der axialen Richtung der Schneckenwelle erstreckenden Reihen auf der Umfangsfläche des Wellenstabes - im Querschnitt des Wellenstabes gesehenen - gegenüberliegen. Unter zumindest im Wesentlichen gleichem Winkelabschnitt wird in diesem Zusammenhang verstanden, dass sich alle Winkelabschnitte um maximal 10%, bevorzugt um maximal 5%, besonders bevorzugt um maximal 2%, insbesondere bevorzugt um maximal 1%, ganz besonders bevorzugt um maximal 0,5% und höchst bevorzugt gar nicht unterscheiden. Bei dieser Ausführungsform überlappen sich mithin bevorzugt die Enden der in Umfangsrichtung des Wellenstabes benachbarten Flügelelemente. Daher ist es insbesondere bei dieser Ausführungsform bevorzugt, dass die beiden im Querschnitt des Wellenstabes gesehen in der Umfangsrichtung des Wellenstabes benachbarten Flügelelemente axial geringfügig zueinander versetzt sind, und zwar vorzugsweise so, dass die beiden in Umfangsrichtung liegenden Enden der Flügelelemente axial verschoben sind, aber Bereiche dieser beiden Flügelelemente, wie das rechte Drittel des einen Flügelelements und das linke Drittel des anderen Flügelelements, in der Umfangsrichtung des Wellenstabes gesehen, überlappen. Vorzugsweise sind die beiden im Querschnitt des Wellenstabes gesehen in der Umfangsrichtung des Wellenstabes benachbarten Flügelelemente axial so zueinander versetzt, dass das Verhältnis des axialen Abstandes A der beiden in Umfangsrichtung des Wellenstabes benachbarten Flügelelemente zu der Breite B des Flügelelements 0,25 bis 3,5, bevorzugt 0,375 bis 1,5, besonders bevorzugt 0,5 bis 1,0, ganz besonders bevorzugt 0,625 bis 0,875 und höchst bevorzugt 0,7 bis 0,8 beträgt. Alternativ dazu können, auch wenn dies weniger bevorzugt ist, nicht alle, sondern mindestens 50%, bevorzugt mindestens 90% und weiter bevorzugt mindestens 80% aller Flügelelemente das vorgenannte Verhältnis aufweisen. Dadurch, dass sich die Flügelelemente über den gleichen Winkelabschnitt der Umfangsfläche des Wellenstabes erstrecken und sich die Flügelelemente der beiden in der axialen Richtung der Schneckenwelle erstreckenden Reihen der Flügelelemente gegenüberliegen und überlappen, wird nicht nur eine exzellente Förderleistung in Bezug auf die Menge der in Förderrichtung - pro Zeiteinheit und bezogen auf den Schneckenwellendurchmesser - geförderten Mischung erreicht, sondern insbesondere ein Rückfluss eines Teils der zu fördernden Mischung entgegen der Förderrichtung zuverlässig vermieden oder zumindest drastisch verringert. Dadurch wird in dem Innenraum des Gehäuses, in dem die Schneckenwelle angeordnet ist, eine geeignete Plastifizierung eingestellt, so dass auf Stauringe an der Innenumfangsfläche des Gehäuses, wie im Stand der Technik erforderlich, verzichtet werden kann, ohne dass sich unerwünschte Ablagerungen an der Schneckenwelle bzw. an dem Stauring und insbesondere an der Leeseite des Staurings ansammeln.

Alternativ zu der vorgenannten Ausführungsform ist es jedoch auch möglich, auch wenn dies gemäß der vorliegenden Erfindung weniger bevorzugt ist, da die vorstehenden Vorteile zumindest nicht in diesem Umfang erreicht werden, dass sich jedes der Flügelelemente des zumindest einen zweiflügligen Abschnitts der Schneckenwelle - im Querschnitt des Wellenstabes gesehen - über einen Winkelabstand von 45° bis 135°, von 60° bis 120°, von 70° bis 110°, von 80° bis 100° oder von 85° bis 95°, wie beispielsweise etwa 90°. Auch bei diesen Ausführungsformen erstreckt sich der zumindest eine zweiflüglige Abschnitt der Schneckenwelle erfindungsgemäss über mindestens 0,2 D, bevorzugt mindestens 0,5 D, besonders bevorzugt mindestens 1 D und ganz besonders bevorzugt mindestens 10 D der Länge der Schneckenwelle. Auch bei dieser Ausführungsform der vorliegenden Erfindung ist es besonders bevorzugt, dass sich die Längserstreckungen der Flügelelemente im Wesentlichen senkrecht zu der Längsrichtung der Schneckenwelle erstrecken, wobei im Wesentlichen senkrecht wie vorstehend definiert ist.

Ein Abschnitt für eine Schneckenwelle bzw. ein Schneckenwellenabschnitt kann einen Wellenstab mit einem kreisförmigen Querschnitt umfassen, wobei auf der Umfangsfläche des Wellenstabes voneinander beabstandete, sich von der Umfangsfläche des Wellenstabes nach außen erstreckende Flügelelemente angeordnet sind, wobei die Flügelelemente auf dem Wellenstab in zwei sich in der axialen Richtung der Schneckenwelle über zumindest einen Abschnitt der Umfangsfläche des Wellenstabes erstreckenden Reihen angeordnet sind, wobei dieser sich in der axialen Richtung der Schneckenwelle erstreckende Abschnitt, außer den in den zwei Reihen angeordneten Flügelelementen, keine weiteren Flügelelemente umfasst, wobei der sich in der axialen Richtung erstreckende Abschnitt der Schneckenwelle, in dem sich jedes der Flügelelemente über den vorgenannten Winkelabstand der Umfangsfläche des Wellenstabes erstreckt, mindestens 0,2 D der Länge der Schneckenwelle beträgt, wobei D der Durchmesser der Schneckenwelle ist, und, wobei jede Reihe vorzugsweise ein, zwei, drei oder vier axial voneinander beabstandete Flügelelemente umfasst. Die vorstehend in Bezug auf die Schneckenwelle als bevorzugt beschriebenen Merkmale sind auch für den Schneckenwellenabschnitt bevorzugt.

Ferner betrifft die vorliegende Erfindung ein Gehäuse einer Misch- und Knetmaschine für kontinuierliche Aufbereitungsprozesse, gemäss Anspruch 13, wobei in dem Gehäuse ein hohler Innenraum ausgebildet ist, in dem sich zumindest abschnittsweise in axialer Richtung eine zuvor beschriebene Schneckenwelle erstreckt, und wobei in dem Gehäuse eine Vielzahl von Knetelementen vorgesehen ist, welche sich von der Innenumfangsfläche des Gehäuses in den hohlen Innenraum des Gehäuses hinein erstrecken, wobei die Knetelemente in zumindest zwei sich in der axialen Richtung über zumindest einen Abschnitt der Innenumfangsfläche des Gehäuses erstreckenden Reihen angeordnet sind. Bevorzugt korrespondiert der Abschnitt des Gehäuses, in dem die Knetelemente in zumindest zwei sich in der axialen Richtung erstreckenden Reihen angeordnet sind, mit dem Abschnitt, in dem auf der Schneckenwelle die Flügelelemente in zwei Reihen angeordnet sind. Außerdem betrifft die vorliegende Erfindung eine Misch- und Knetmaschine für kontinuierliche Aufbereitungsprozesse, gemäss Anspruch 14, wie zur Herstellung von Polymergranulat, Polymerstrangpressprofilen oder Polymerformteilen, mit einer Eintrags- und Mischvorrichtung und vorzugsweise mit einer Austragsvorrichtung, wobei die Eintrags- und Mischvorrichtung ein zuvor beschriebenes Gehäuse umfasst. Vorzugsweise weist das Gehäuse der Misch- und Knetmaschine an seiner Innenumfangsfläche zumindest abschnittsweise zwei Reihen von Knetelementen auf, welche sich, im Querschnitt des Gehäuses gesehen, gegenüberliegen, also um einen Winkel von 180° verschoben sind.

Nachfolgend wird die vorliegende Erfindung unter Bezug auf die Zeichnung näher beschrieben, in der:
- Fig. 1a: einen schematischen Längsschnitt einer erfindungsgemäßen Mischund Knetmaschine zeigt;
- Fig. 1b: eine perspektivische Ansicht des Gehäuses der in der Fig. 1a gezeigten Misch- und Knetmaschine zeigt;
- Fig. 2a: eine perspektivische Ansicht eines axialen Abschnitts einer Schneckenwelle gemäß einer Ausführungsform der vorliegenden Erfindung zeigt;
- Fig. 2b: eine Draufsicht des in der Fig. 2a gezeigten axialen Abschnitts der Schneckenwelle zeigt;
- Fig. 2c: die Abwicklung der Mantelfläche des Wellenstabes des in der Fig. 2a gezeigten axialen Abschnitts der Schneckenwelle mit darauf angeordneten Flügelelementen zeigt;
- Fig. 3: die Abwicklung der Mantelfläche des Wellenstabes eines axialen Abschnitts einer Schneckenwelle mit darauf angeordneten Flügelelementen und in die Spalte zwischen den Flügelelementen hineinragenden Knetelementen gemäß einer anderen Ausführungsform der vorliegenden Erfindung zeigt;
- Fig. 4: die Abwicklung der Mantelfläche des Wellenstabes eines axialen Abschnitts einer Schneckenwelle mit darauf angeordneten Flügelelementen und in die Spalte zwischen den Flügelelementen hineinragenden Knetelementen gemäß einer anderen Ausführungsform der vorliegenden Erfindung zeigt;
- Fig. 5: die Abwicklung der Mantelfläche des Wellenstabes eines axialen Abschnitts einer Schneckenwelle mit darauf angeordneten Flügelelementen und in die Spalte zwischen den Flügelelementen hineinragenden Knetelementen gemäß einer anderen Ausführungsform der vorliegenden Erfindung zeigt und
- Fig. 6: die Abwicklung der Mantelfläche des Wellenstabes eines axialen Abschnitts einer Schneckenwelle mit darauf angeordneten Flügelelementen und in die Spalte zwischen den Flügelelementen hineinragenden Knetelementen gemäß einer anderen Ausführungsform der vorliegenden Erfindung zeigt.

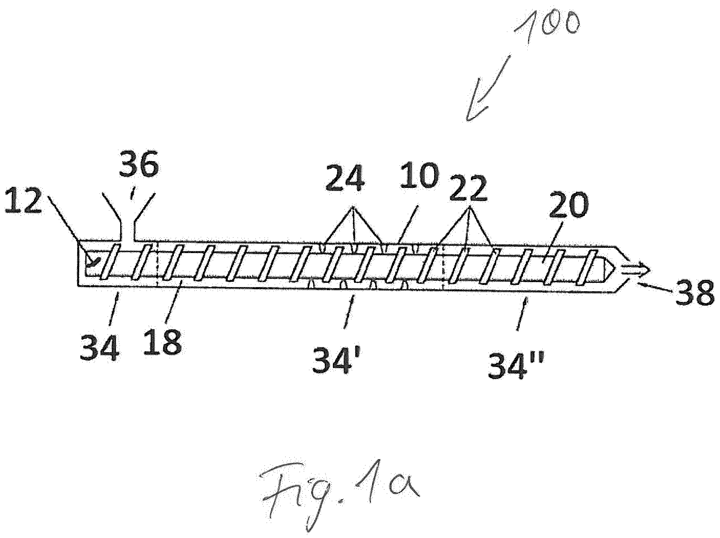

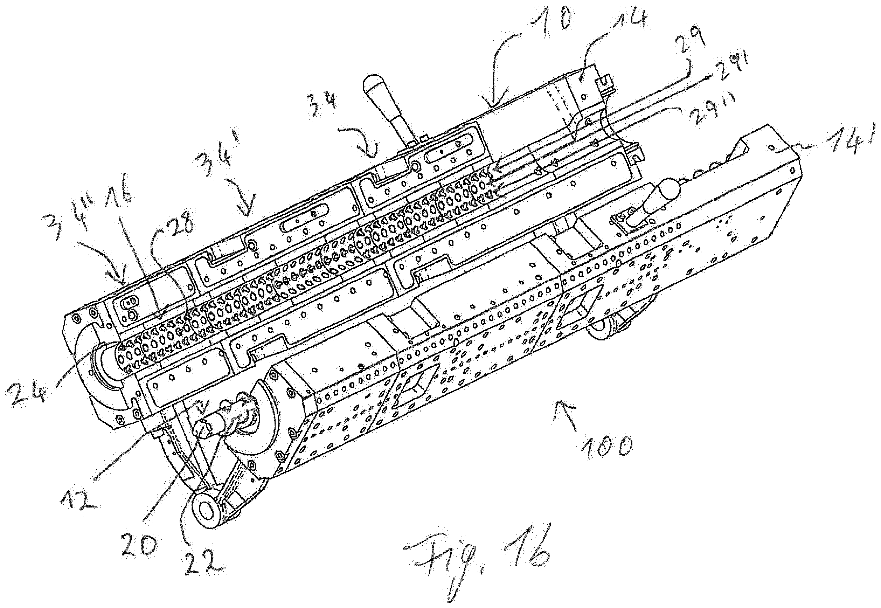

Die in den Figuren 1a und 1b gezeigte und im Ganzen mit 100 bezeichnete Misch- und Knetmaschine umfasst ein Gehäuse 10 und eine in dem Gehäuse 10 angeordnete Schneckenwelle 12. Das Gehäuse 10 umfasst zwei Gehäusehälften 14, 14', die innen mit einer sogenannten Gehäuseschale 16 ausgekleidet sind. Dabei wird die Gehäuseschale 16 in der vorliegenden Patentanmeldung als Bestandteil des Gehäuses 10 betrachtet. Die Innenumfangsfläche des Gehäuses 10 begrenzt, wenn die beiden Gehäusehälften 14, 14' geschlossen sind, einen zylindrischen hohlen Innenraum 18, also einen Innenraum 18 mit kreisförmigem Querschnitt. Die Schneckenwelle 12 umfasst einen Wellenstab 20, auf dessen Umfangsfläche Flügelelemente 22 angeordnet sind, welche sich auf der Umfangsfläche des Wellenstabes 20 radial nach außen erstrecken, wobei die einzelnen Flügelelemente 22 voneinander beabstandet sind. In den beiden Gehäusehälften 14, 14' sind Aufnahmen 28 für Knetelemente 24, also für Knetbolzen, Knetzähne und dergleichen, vorgesehen. Dabei ist jede der Aufnahmen 28 eine Bohrung 28, welche sich von der Innenumfangsfläche der Gehäuseschale 16 durch die Gehäusewand hindurch erstreckt. Das untere, radial innen liegende Ende jeder Aufnahme 28 kann beispielsweise im Querschnitt vierkantig ausgestaltet sein. Jeder Knetbolzen 24 kann dann beispielsweise an seinem unteren Ende ein passgenau in das vierkantig ausgestaltete radial innere Ende der Aufnahmen 28 passendes Ende aufweisen und ist dadurch im eingesetzten Zustand verdrehsicher in der Aufnahme 28 fixiert. Der Knetbolzen 24 ist an seinem in der Aufnahme 28 liegenden Ende mit einem in dem darüberliegenden Ende der Aufnahme 28 eingesetzten Fixierelement (nicht dargestellt) durch Verschrauben verbunden. Alternativ kann der Knetbolzen 24 auch ein Innengewinde für eine Schraube aufweisen und anstelle über das Fixierelement und der Mutter mit einer Schraube fixiert sein.

Wie insbesondere aus der Figur 1b hervorgeht, erstrecken sich die voneinander jeweils gleich beabstandeten Aufnahmen 28 für die Knetbolzen 24 in jeder der beiden Gehäusehälften 14, 14', in der axialen Richtung gesehen, in Form von drei Reihen 29, 29', 29". Somit beträgt die Gesamtzahl der Reihen von Aufnahmen 29, 29', 29" des Gehäuses sechs. Unter Reihe wird im Sinne der vorliegenden Erfindung verstanden, dass eine über die voneinander in axialer Richtung beabstandeten Aufnahmen 28 einer Reihe 29, 29', 29" gelegte Verbindungslinie eine Gerade ist. Wie in den Figuren 1a und 1b gezeigt, ist die Misch- und Knetmaschine 100 in axialer Richtung in mehrere Verfahrensabschnitte 34, 34', 34" unterteilt, wobei jeder Verfahrensabschnitt 34, 34', 34" hinsichtlich der Anzahl an Knetbolzen 24 sowie der Anzahl und der Ausdehnung der Flügelelemente 22 auf dem Wellenstab 20 an die Funktion der einzelnen Verfahrensabschnitte 34, 34', 34" angepasst ist. Wie in der Figur 1b dargestellt, sind in dem linken Abschnitt 34 und in dem rechten Abschnitt 34" der oberen Gehäusehälfte 14 von den drei Reihen 29, 29', 29" von Aufnahmen 28 für Knetbolzen 24 zwei Reihen, nämlich die obere Reihe 29 und die untere Reihe 29", mit Knetbolzen 24 bestückt, wohingegen die mittlere Reihe 29' nicht mit Knetbolzen 24 bestückt ist. Im Unterschied dazu ist in dem mittleren Abschnitt 34' der oberen Gehäusehälfte 14 von den drei Reihen 29, 29', 29" von Aufnahmen 28 für Knetbolzen 24 eine Reihe, nämlich die mittlere Reihe 29', mit Knetbolzen 24 bestückt, wohingegen die obere Reihe 29 und die untere Reihe 29" nicht mit Knetbolzen 24 bestückt ist. Auch in dem mittleren Abschnitt 34' der unteren Gehäusehälfte 14' ist lediglich die mittlere Reihe mit Knetbolzen bestückt, so dass der mittlere Abschnitt 34' des Gehäuses 10 insgesamt zwei Reihen von sich gegenüberliegenden Knetbolzen 24 aufweist, d.h. der Winkel zwischen den beiden Reihen von Knetbolzen 24 auf der Innenumfangsfläche des Gehäuses 10 beträgt 180°. Das zu mischende Ausgangsmaterial wird der Misch- und Knetmaschine 100 über den Fülltrichter 36 zugeführt, dann durch die Verfahrensabschnitte 34, 34', 34" geführt und schließlich über die Austrittsöffnung 38 abgeführt. Anstelle der dargestellten Verfahrensabschnitte 34, 34', 34" kann die erfindungsgemäße Misch- und Knetmaschine 100 auch mehr Verfahrensabschnitte, wie insbesondere auch vier Verfahrensabschnitte, oder weniger Verfahrensabschnitte, wie zwei oder einen Verfahrensabschnitt, aufweisen.

Erfindungsgemäß ist die Schneckenwelle 12 für eine Misch- und Knetmaschine gemäß der vorliegenden Erfindung so ausgestaltet, dass die Flügelelemente 22 auf der Umfangsfläche des Wellenstabes 20, zumindest in einem sich in der axialen Richtung der Schneckenwelle 12 erstreckenden Abschnitt, wie dem in der Figur 1b gezeigten mittleren Verfahrensabschnitt 34', in zwei sich in der axialen Richtung der Schneckenwelle 12 erstreckenden Reihen angeordnet sind, also die Schneckenwelle 12 abschnittsweise zweiflüglig ausgestaltet ist.

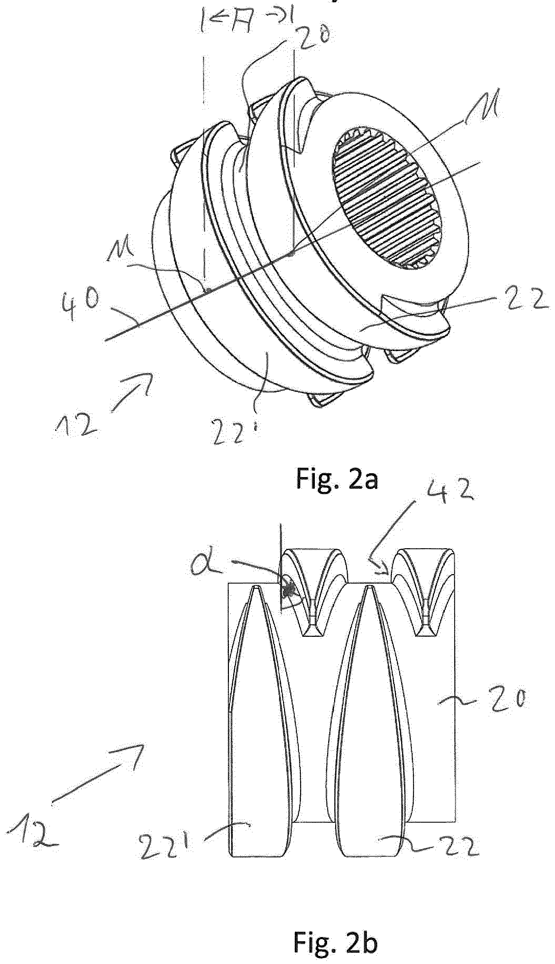

In den Figuren 2a bis 2c ist ein solcher zweiflügliger Abschnitt einer Schneckenwelle 12 gemäß einer bevorzugten Ausführungsform der vorliegenden Erfindung dargestellt. Auf dem im zylindrischen Wellenstab 20 der Schneckenwelle 12 sind Flügelelemente 22, 22', 22", 22'" angeordnet, welche sich von der Umfangsfläche des Wellenstabes 20 radial nach außen erstrecken. Dabei sind die einzelnen Flügelelemente 22, 22', 22", 22'" so ausgestaltet, dass sie, in Draufsicht, bikonvexe Außenumfangsflächen aufweisen, wobei sich die Längserstreckungen L der Flügelelemente 22, 22', 22", 22'" senkrecht zu der Längsrichtung der Schneckenwelle 12 erstrecken. Unter Längserstreckung L wird dabei die längste mögliche Gerade zwischen zwei verschiedenen Punkten auf der Außenumfangsfläche eines Flügelelements 22, 22', 22", 22"', also im vorliegenden Fall die Länge L, verstanden. Alle Flügelelemente 22, 22', 22", 22'" weisen dieselbe Form sowie dieselben Dimensionen auf. Das Verhältnis der Länge L zu der Breite B der einzelnen Flügelelemente 22, 22', 22", 22'" beträgt etwa 7,25, wobei die Breite B die längste gerade Erstreckung der Außenumfangsfläche des Flügelelements 22, 22', 22", 22'" ist, welche sich senkrecht zu der Länge L des Flügelelements 22, 22', 22", 22'" erstreckt. Wie insbesondere aus den Figuren 2a und 2b ersichtlich, erstrecken sich die seitlichen Flanken 42 der Flügelelemente 22, 22', 22", 22'" von der Umfangsfläche des Wellenstabes 20 zu der Außenumfangsfläche der Flügelelemente 22, 22', 22", 22'" nicht senkrecht, sondern in einem Winkel α von 2°. Benachbarte Flügelelemente 22, 22', 22", 22'" sind sowohl in der Umfangsrichtung des Wellenstabes 20 als auch in der axialen Richtung voneinander beabstandet.

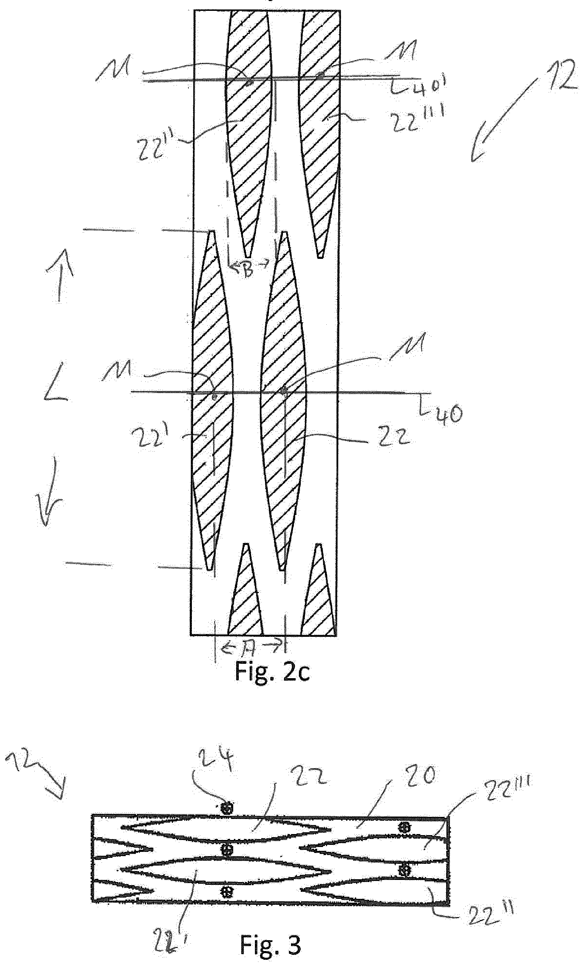

Dabei sind sowohl die axial voneinander beabstandeten Flügelelemente 22, 22' in einer sich axial erstreckenden Reihe 40 als auch die axial voneinander beabstandeten Flügelelemente 22", 22'" in einer sich axial erstreckenden Reihe 40' angeordnet. Eine sich axial erstreckende Reihe 40, 40' von Flügelelementen 22, 22', 22", 22'" liegt gemäß der vorliegenden Erfindung vor, wenn - wie in der in den Figuren 2a, 2b und 2c gezeigten Ausführungsform - eine über die Mittelpunkte M der Außenumfangsfläche von voneinander in axialer Richtung beabstandeter Flügelelemente 22, 22' bzw. 22", 22'" gelegte Verbindungslinie eine Gerade ist. Der Mittelpunkt M eines Flügelelements 22, 22', 22", 22'" ist dabei der Punkt, der in der Mitte der Länge L des Flügelelements 22, 22', 22", 22'" liegt. Die einzelnen Flügelelemente 22, 22' der Reihe 40 liegen den Flügelelementen 22", 22'" der Reihe 40' auf der Umfangsfläche des Wellenstabes 20 - im Querschnitt des Wellenstabes 20 gesehenen - gegenüber, d.h. die Mittelpunkte M der Außenumfangsflächen der Flügelelemente 22, 22', 22", 22'" beider Reihen 40, 40' sind auf der Umfangsfläche des Wellenstabes um 180° gegeneinander verschoben. Das Verhältnis des axialen Abstandes A der benachbarten Flügelelemente 22, 22' der Reihe 40 bzw. der benachbarten Flügelelemente 22", 22'" der Reihe 40' zu der Breite B der Flügelelemente 22, 22' beträgt jeweils etwa 1,5. Dabei ist die Breite B des Flügelelements wie vorstehend definiert und ist der axiale Abstand A zweier axial benachbarter Flügelelemente 22, 22' bzw. 22", 22'" der Abstand zwischen den Mittelpunkten M der Außenumfangsflächen der axial benachbarten Flügelelemente 22, 22' bzw. 22", 22'".

Alle Längen L der Flügelelemente 22, 22', 22", 22'" erstrecken sich jeweils über den gleichen Winkelabschnitt von 195° über die (Außen)umfangsfläche bzw. Mantelfläche des Wellenstabes 20. Weil diese Winkel mehr als 180° betragen, überlappen sich die Enden der in Umfangsrichtung des Wellenstabes 20 benachbarten Flügelelemente 20, 20'" bzw. 20', 20" teilweise. Daher sind jeweils die im Querschnitt des Wellenstabes 20 gesehen in der Umfangsrichtung des Wellenstabes 20 benachbarten Flügelelemente 20, 20'" bzw. 20', 20" axial geringfügig zueinander versetzt, und zwar so, dass die beiden in der Umfangsrichtung des Wellenstabes 20 liegenden Enden der Flügelelemente axial um etwa 60% der Breite B eines Flügelelements 22, 22', 22", 22'" verschoben sind, so dass Bereiche dieser beiden Flügelelemente, wie das rechte Drittel des einen Flügelelements 22 und das linke Drittel des anderen Flügelelements 22'", in der Umfangsrichtung des Wellenstabes 20 des Wellenstabes gesehen, überlappen. Durch diese vergleichsweise lange Erstreckung der Flügelelemente 22, 22', 22", 22'" und die sich daraus ergebende teilweise Überlappung der Flügelelemente 22, 22', 22", 22'" wird nicht nur eine exzellente Förderleistung in Bezug auf die Menge der in Förderrichtung - pro Zeiteinheit und bezogen auf den Schneckenwellendurchmesser - geförderten Mischung erreicht, sondern insbesondere ein Rückfluss eines Teils der zu fördernden Mischung entgegen der Förderrichtung zuverlässig vermieden oder zumindest drastisch verringert. Dadurch wird in dem Innenraum 18 des Gehäuses 20, in dem die Schneckenwelle 12 angeordnet ist, eine geeignete Plastifizierung eingestellt, so dass auf Stauringe an der Innenumfangsfläche des Gehäuses 10, wie im Stand der Technik erforderlich, verzichtet werden kann, ohne dass sich unerwünschte Ablagerungen an der Schneckenwelle 12 ansammeln.

In der Figur 3 ist die Abwicklung der Mantelfläche eines Wellenstabes 20 eines axialen Abschnitts einer Schneckenwelle 12 mit darauf angeordneten Flügelelementen 22, 22', 22", 22'" und mit in die Spalte zwischen den Flügelelementen 22, 22', 22", 22'" hineinragenden Knetelementen 24 gemäß einem Ausführungsbeispiel der vorliegenden Erfindung dargestellt. Bei dem Betrieb der Misch- und Knetmaschine rotiert die Schneckenwelle 12 und bewegt sich die Schneckenwelle 12 zeitgleich pro Umdrehung einmal axial translatorisch vor und zurück. Dabei bewegen sich die seitlichen Flanken 42 der Flügelelemente 22, 22', 22", 22'" entlang der Knetelemente 24.

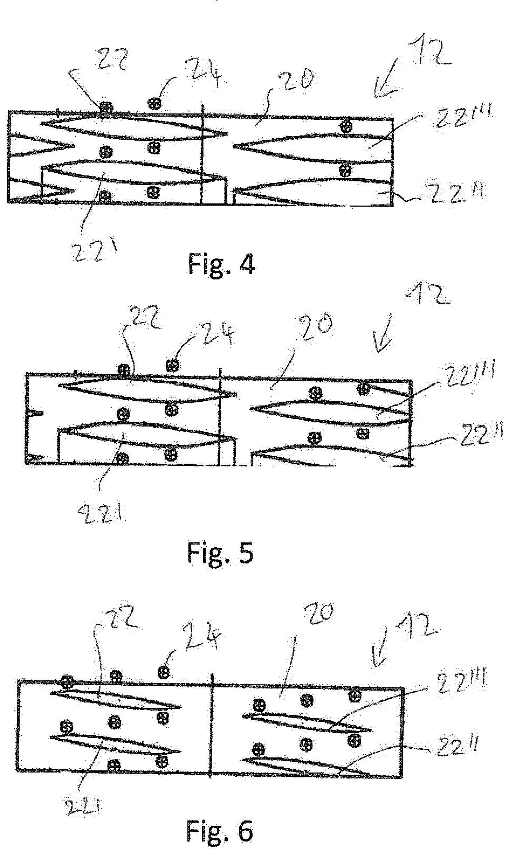

In den Figuren 4 bis 6 sind zu der in der Figur 3 alternative Ausführungsformen dargestellt. Bei der in der Figur 4 gezeigten Ausführungsform ist der Winkelabschnitt, über den sich die Flügelelemente 22, 22', 22", 22'" geringer als bei der Ausführungsform der Figur 3. Zudem umfasst die Gehäuseinnenumfangsfläche bei dieser Ausführungsform drei Reihen von Knetbolzen 24. Bei der in der Figur 5 gezeigten Ausführungsform umfasst die Gehäuseinnenumfangsfläche 4 Reihen von Knetbolzen 24 und bei der in der Figur 6 gezeigten Ausführungsform 6 Reihen von Knetbolzen 24. Zudem weisen die in den Figuren 5 und 6 gezeigten Flügelelemente 22, 22', 22", 22'" eine andere Geometrie auf als die der Figuren 3 und 4.

### Bezugszeichenliste

- 10: Gehäuse
- 12: Schneckenwelle
- 14, 14': Gehäusehälfte
- 16: Gehäuseschale
- 18: Hohler Innenraum
- 20: Wellenstab
- 22, 22', 22", 22'": Flügelelement
- 24: Knetelement/Knetbolzen
- 28: Aufnahme/Bohrung für Knetelement
- 29, 29', 29": (Axial erstreckende) Reihe von Aufnahme für Knetelemente
- 34, 34', 34": Verfahrensabschnitt
- 36: Fülltrichter
- 38: Austrittsöffnung
- 40, 40': (Axial erstreckende) Reihe von Flügelelementen
- 42: Seitliche Flanke eines Flügelelements
- 100: Misch- und Knetmaschine

- α: Winkel zwischen der Umfangsfläche des Wellenstabes und der seitlichen Flanke eines Flügelelements
- A: Axialer Abstand A zweier benachbarter Flügelelemente einer Reihe
- B: Breite (längste gerade Erstreckung der Außenumfangsfläche des Flügelelements, welche sich senkrecht zu der Länge des Flügelelements erstreckt)
- L: Länge (längste gerade Erstreckung der Außenumfangsfläche des Flügelelements)
- M: Mittelpunkt der Außenumfangsfläche eines Flügelelements

## Patentansprüche

1. Schneckenwelle (12) für eine Misch- und Knetmaschine (100), insbesondere für kontinuierliche Aufbereitungsprozesse, mit einem Wellenstab (20) mit einem kreisförmigen Querschnitt, auf dessen Umfangsfläche voneinander beabstandete, sich von der Umfangsfläche des Wellenstabes (20) nach außen erstreckende Flügelelemente (22, 22', 22", 22"') angeordnet sind, wobei die Flügelelemente (22, 22', 22", 22"') auf der Umfangsfläche des Wellenstabes (20), zumindest in einem sich in der axialen Richtung der Schneckenwelle (12) erstreckenden Abschnitt, in zwei sich in der axialen Richtung der Schneckenwelle (12) erstreckenden Reihen (40, 40') angeordnet sind, da
durch gekennzeichnet, dass
dieser sich in der axialen Richtung der Schneckenwelle (12) erstreckende Abschnitt, außer den in den zwei Reihen angeordneten Flügelelementen, keine weiteren Flügelelemente umfasst, sich jedes der Flügelelemente (22, 22', 22", 22'") dieses sich in der axialen Richtung der Schneckenwelle (12) erstreckenden Abschnitts - im Querschnitt des Wellenstabes (20) gesehen - über einen Winkelabstand 20° bis 160° oder von mindestens 160° erstreckt, und dass der sich in der axialen Richtung erstreckende Abschnitt der Schneckenwelle (12), in dem sich jedes der Flügelelemente (22, 22', 22", 22'") über den vorgenannten Winkelabstand der Umfangsfläche des Wellenstabes (20) erstreckt, mindestens 0,2 D der Länge der Schneckenwelle (12) beträgt, wobei D der Durchmesser der Schneckenwelle (12) ist.

2. Schneckenwelle (12) nach Anspruch 1, **dadurch gekennzeichnet, dass** sich die Flügelelemente (22, 22', 22", 22"') von der Umfangsfläche des Wellenstabes (20) radial nach außen erstrecken.

3. Schneckenwelle (12) nach Anspruch 1 oder 2, **dadurch gekennzeichnet, dass** sich die Flügelelemente (22, 22', 22", 22"') der beiden Reihen (40, 40') auf der Umfangsfläche des Wellenstabes (20) - im Querschnitt des Wellenstabes (20) gesehenen - gegenüberliegen.

4. Schneckenwelle (12) nach zumindest einem der vorhergehenden Ansprüche, **dadurch gekennzeichnet, dass** jedes der Flügelelemente (22, 22', 22", 22'") des zumindest einen sich in der axialen Richtung der Schneckenwelle (12) erstreckenden Abschnitts eine Längserstreckung L aufweist, welche sich in einem Winkel von 45° bis 135°, bevorzugt von 60° bis 120°, besonders bevorzugt von 80° bis 100°, ganz besonders bevorzugt von 85° bis 95° und höchst bevorzugt von 90° zu der axialen Richtung der Schneckenwelle (12) erstreckt.

5. Schneckenwelle (12) nach zumindest einem der vorhergehenden Ansprüche, **dadurch gekennzeichnet, dass** jedes der Flügelelemente (22, 22', 22", 22'") des zumindest einen sich in der axialen Richtung der Schneckenwelle (12) erstreckenden Abschnitts eine, in Draufsicht, elliptische, ovale oder bikonvexe Außenumfangsfläche aufweist, wobei vorzugsweise der sich in der axialen Richtung erstreckende Abschnitt der Schneckenwelle (12), in dem jedes der Flügelelemente (22, 22', 22", 22'") die vorgenannte Form der Außenumfangsfläche aufweist, bevorzugt mindestens 0,5 D, besonders bevorzugt mindestens 1 D und ganz besonders bevorzugt mindestens 10 D der Länge der Schneckenwelle (12) beträgt.

6. Schneckenwelle (12) nach Anspruch 5, **dadurch gekennzeichnet, dass** jedes der Flügelelemente (22, 22', 22", 22"') die gleiche elliptische, ovale oder bikonvexe Außenumfangsfläche aufweist.

7. Schneckenwelle (12) nach Anspruch 5 oder 6, **dadurch gekennzeichnet, dass** jedes der Flügelelemente (22, 22', 22", 22") eine bikonvexe Außenumfangsfläche mit einem Verhältnis von Länge L zu Breite B von 3 bis 11, bevorzugt von 4 bis 10, besonders bevorzugt von 5 bis 9, ganz besonders bevorzugt von 6 bis 8 und höchst bevorzugt von 7 bis 7,5 aufweist, wobei die Länge L die längste gerade Erstreckung der Außenumfangsfläche des Flügelelements (22, 22', 22", 22'") ist und die Breite B die längste gerade Erstreckung der Außenumfangsfläche des Flügelelements (22, 22', 22", 22'") ist, welche sich senkrecht zu der Länge L des Flügelelements (22, 22', 22", 22'") erstreckt.

8. Schneckenwelle (12) nach zumindest einem der Ansprüche 5 bis 7, **dadurch gekennzeichnet, dass** sich die seitlichen Flanken (42) jedes der Flügelelemente (22, 22', 22", 22'") von der Umfangsrichtung des Wellenstabes (20) zu der Außenumfangsfläche (22, 22', 22", 22'") der Flügelelemente (22, 22', 22", 22'") senkrecht nach oben oder in einem Winkel α von 1° bis 60°, bevorzugt von 2° bis 40°, besonders bevorzugt von 3° bis 20° und ganz besonders bevorzugt von 4° bis 10° bezogen auf die Querschnittsebene des Wellenstabes (20) erstrecken.

9. Schneckenwelle (12) nach zumindest einem der vorhergehenden Ansprüche, **dadurch gekennzeichnet, dass** das Verhältnis des axialen Abstandes A zweier benachbarter Flügelelemente (22, 22', 22", 22'") einer Reihe (40, 40') zu der Breite B eines Flügelelements (22, 22', 22", 22'") 0,5 bis 5, bevorzugt 0,75 bis 3, besonders bevorzugt 1,0 bis 2,0, ganz besonders bevorzugt 1,25 bis 1,75 und höchst bevorzugt 1,4 bis 1,6 beträgt, wobei die Breite B die längste gerade Erstreckung der Außenumfangsfläche des Flügelelements (22, 22', 22", 22"') ist, welche sich senkrecht zu der Länge L des Flügelelements (22, 22', 22", 22"') erstreckt, sowie der axiale Abstand A zweier benachbarter Flügelelemente (22, 22', 22", 22'") der Abstand zwischen den Mittelpunkten M der Außenumfangsflächen der benachbarten Flügelelemente (22, 22', 22", 22'") ist, wobei der Mittelpunkt M der Außenumfangsfläche eines Flügelelements (22, 22', 22", 22'") der Punkt ist, welcher in der Mitte der längsten geraden Erstreckung L der Außenumfangsfläche des Flügelelements (22, 22', 22", 22'") liegt.

10. Schneckenwelle (12) nach zumindest einem der vorhergehenden Ansprüche, **dadurch gekennzeichnet, dass** sich jedes der Flügelelemente (22, 22', 22", 22'") des zumindest einen sich in der axialen Richtung der Schneckenwelle (12) erstreckenden Abschnitts - im Querschnitt des Wellenstabes (20) gesehenen - über einen Winkelabstand von mindestens 170°, weiter bevorzugt von mindestens 175°, noch weiter bevorzugt von mehr als 180°, noch weiter bevorzugt von mehr als 180° bis 270°, besonders bevorzugt von 185° bis 230°, insbesondere bevorzugt von 185° bis 210°, ganz besonders bevorzugt von 190° bis 200° und höchst bevorzugt von 192° bis 197° der Umfangsfläche des Wellenstabes (20) erstreckt, wobei vorzugsweise der sich in der axialen Richtung erstreckende Abschnitt der Schneckenwelle (12), in dem sich jedes der Flügelelemente (22, 22', 22", 22'") über den vorgenannten Winkelabstand der Umfangsfläche des Wellenstabes (20) erstreckt, bevorzugt mindestens 0,5 D, besonders bevorzugt mindestens 1 D und ganz besonders bevorzugt mindestens 10 D der Länge der Schneckenwelle (12) beträgt.

11. Schneckenwelle (12) nach zumindest einem der Ansprüche 1 bis 9, **dadurch gekennzeichnet, dass** sich jedes der Flügelelemente (22, 22', 22", 22"') des zumindest einen sich in der axialen Richtung der Schneckenwelle (12) erstreckenden Abschnitts - im Querschnitt des Wellenstabes (20) gesehenen - über einen Winkelabstand von 45° bis 135°, besonders bevorzugt von 60° bis 120°, weiter bevorzugt von 70° bis 110°, ganz besonders bevorzugt von 80° bis 100° und höchst bevorzugt von 85° bis 95° der Umfangsfläche des Wellenstabes (20) erstreckt, wobei vorzugsweise der sich in der axialen Richtung erstreckende Abschnitt der Schneckenwelle (12), in dem sich jedes der Flügelelemente (22, 22', 22", 22"') über den vorgenannten Winkelabstand der Umfangsfläche des Wellenstabes (20) erstreckt, mindestens 0,5 D, besonders bevorzugt mindestens 1 D und ganz besonders bevorzugt mindestens 10 D der Länge der Schneckenwelle (12) beträgt.

12. Schneckenwelle (12) nach zumindest einem der vorhergehenden Ansprüche, **dadurch gekennzeichnet, dass** sich jedes der Flügelelemente (22, 22', 22", 22'") des zumindest einen sich in der axialen Richtung der Schneckenwelle (12) erstreckenden Abschnitts - im Querschnitt des Wellenstabes (20) gesehenen - über den gleichen Winkelabstand der Umfangsfläche des Wellenstabes (20) erstreckt, wobei vorzugsweise der sich in der axialen Richtung erstreckende Abschnitt der Schneckenwelle (12), in dem sich jedes der Flügelelemente (22, 22', 22", 22'") über den gleichen Winkelabstand der Umfangsfläche des Wellenstabes (20) erstreckt, bevorzugt mindestens 0,5 D, besonders bevorzugt mindestens 1 D und ganz besonders bevorzugt mindestens 10 D der Länge der Schneckenwelle (12) beträgt.

13. Gehäuse (10) einer Misch- und Knetmaschine (100) für kontinuierliche Aufbereitungsprozesse, wobei in dem Gehäuse (10) ein hohler Innenraum (18) ausgebildet ist, in dem sich zumindest abschnittsweise in axialer Richtung eine Schneckenwelle (12) nach zumindest einem der Ansprüche 1 bis 12 erstreckt, und wobei in dem Gehäuse (10) eine Vielzahl von Knetelementen (24) vorgesehen ist, welche sich der Innenumfangsfläche des Gehäuses (10) in den hohlen Innenraum (18) des Gehäuses (10) hinein erstrecken, wobei die Knetelemente (24) in zumindest zwei sich in der axialen Richtung über zumindest einen Abschnitt der Innenumfangsfläche des Gehäuses (10) erstreckenden Reihen angeordnet sind.

14. Misch- und Knetmaschine (100) für kontinuierliche Aufbereitungsprozesse, wie zur Herstellung von Polymergranulat, Polymerstrangpressprofilen oder Polymerformteilen, welche ein Gehäuse nach Anspruch 13 umfasst.

## Claims

1. Worm shaft (12) for a mixing and kneading machine (100), in particular for continuous treatment processes, comprising a shaft bar (20) having a circular cross section, with vane members (22, 22', 22", 22"') being arranged apart from each other on the circumferential surface thereof, said vane members (22, 22', 22", 22'") extend outward from the circumferential surface of the shaft bar (20), wherein the vane members (22, 22', 22", 22'") are arranged on the circumferential surface of the shaft bar (20), at least in a section extending in the axial direction of the worm shaft (12), in two rows (40, 40'), which extend in the axial direction of the worm shaft (12),
**characterized in that**
said section extending in the axial direction of the worm shaft (12) comprises no further vane members with the exception of the vane members arranged in two rows,
each of the vane members (22, 22', 22", 22'") of said section extending in the axial direction of the worm shaft (12) extends - as viewed from the cross section of the shaft bar (20) - over an angular distance of 20° to 160° or over an angular distance of at least 160°,
and that the section extending in the axial direction of the worm shaft (12), in which each of the vane members (22, 22', 22", 22'") extends over the aforementioned angular distance of the circumferential surface of the shaft bar (20), measures at least 0,2 D of the length of the worm shaft (12), with D being the diameter of the worm shaft.

2. Worm shaft (12) according to claim 1, **characterized in that** the vane members (22, 22', 22", 22"') extend radially outward from the circumferential surface of the shaft bar (20).

3. Worm shaft (12) according to any one of claims 1 or 2, **characterized in that** the vane members (22, 22', 22", 22"') of the two rows (40, 40') face each other on the circumferential surface of the shaft bar (20) - as viewed from the cross section of the shaft bar (20).

4. Worm shaft (12) according to at least any one of the preceding claims, **characterized in that** each of the vane members (22, 22', 22", 22'") of the at least one section extending in the axial direction of the worm shaft (12) comprises a longitudinal extension L, which extends at an angle to the axial direction of the worm shaft (12) of 45° to 135°, preferably of 60° to 120°, further preferred of 80° to 100°, highly preferred of 85° to 95° and mostly preferred of 90°.

5. Worm shaft (12) according to at least any one of the preceding claims, **characterized in that** each of the vane members (22, 22', 22", 22'") of the at least one section extending in the axial direction of the worm shaft (12) comprises, in the plan view, an elliptical, oval or biconvex outer circumferential surface, wherein preferably the section extending in the axial direction of the worm shaft (12), with each vane member (22, 22', 22", 22'") thereof having the previously mentioned shape of its outer circumferential surface, preferably measures at least 0,5 D, further preferred at least 1 D and mostly preferred at least 10 D of the length of the worm shaft (12).

6. Worm shaft (12) according to claim 5, **characterized in that** each of the vane members (22, 22', 22", 22"') comprises the same elliptical, oval or biconvex outer circumferential surface.

7. Worm shaft (12) according to claim 5 or 6, **characterized in that** each of the vane members (22, 22', 22", 22'") comprises a biconvex outer circumferential surface with a ratio of length L to width W of 3 to 11, preferably 4 to 10, further preferred 5 to 9, highly preferred 6 to 8 and mostly preferred 7 to 7,5 with the length L being the longest straight extension of the outer circumferential surface of the vane member (22, 22', 22", 22"') and the width W being the longest straight extension of the outer circumferential surface of the vane member (22, 22', 22", 22"'), which extends perpendicularly to the length L of the vane member (22, 22', 22", 22'").

8. Worm shaft (12) according to at least any one of claims 5 to 7, **characterized in that** the lateral flanks (42) of each of the vane members (22, 22', 22", 22"') extend from the circumferential direction of the shaft bar (20) either vertically upward to the outer circumferential surface (22, 22', 22", 22"') of the vane members (22, 22', 22", 22'") or in an angle α with respect to the cross-sectional plane of the shaft bar (20), which ranges from 1° to 60°, preferably from 2° to 40°, further preferred from 3° to 20° and mostly preferred from 4° to 10°.

9. Worm shaft (12) according to at least any one of the preceding claims, **characterized in that** the ratio between the axial distance A of two adjacent vane members (22, 22', 22", 22'") of a row (40, 40') and the width W of a vane member (22, 22', 22", 22'") is 0,5 to 5, preferably 0,75 to 3, further preferred 1 to 2, highly preferred 1,25 to 1,75 and mostly preferred 1,4 to 1,6, with the width W being the longest straight extension of the outer circumferential surface of the vane member (22, 22', 22", 22'"), which extends perpendicularly to the length L of the vane member (22, 22', 22", 22"'), with the axial distance A of two adjacent vane members (22, 22', 22", 22'") being the distance between the centers C of the outer circumferential surfaces of the adjacent vane members (22, 22', 22", 22"'), with the center C of the outer circumferential surface of a vane member (22, 22', 22", 22"') being that point, which is located in the middle of the longest straight extension L of the outer circumferential surface of the vane member (22, 22', 22", 22'").

10. Worm shaft (12) according to at least any one of the preceding claims, **characterized in that** each of the vane members (22, 22', 22", 22'") of the at least one section extending in the axial direction of the worm shaft (12) extends over an angular distance - as viewed from the cross section of the shaft bar (20) - of at least 170°, preferably of at least 175°, further preferred of more than 180°, yet further preferred of from more than 180° to 270°, particularly preferred from 185° to 230°, still further preferred from 185° to 210°, highly preferred from 190° to 200° and mostly preferred from 192° to 197° of the circumferential surface of the shaft bar (20), with preferentially the section extending in the axial direction of the worm shaft (12), in which each of the vane members (22, 22', 22", 22"') extend over the previously mentioned angular distance of the circumferential surface of the shaft bar (20), preferably measuring at least 0,5 D of the length of the worm shaft (12), further preferred at least 1 D and mostly preferred at least 10 D thereof.

11. Worm shaft (12) according to at least any one of claims 5 to 9, **characterized in that** each of the vane members (22, 22', 22", 22"') of the at least one section extending in the axial direction of the worm shaft (12) extends over an angular distance - as viewed from the cross section of the shaft bar (20) - of from 45° to 135°, preferably from 60 to 120°, further preferred from 70° to 110°, highly preferred from 80° to 100° and mostly preferred from 85° to 95° of the circumferential surface of the shaft bar (20), with preferentially the section extending in the axial direction of the worm shaft (12), in which each of the vane members (22, 22', 22", 22"') extend over the previously mentioned angular distance of the circumferential surface of the shaft bar (20), measuring at least 0,5 D of the length of the worm shaft (12), further preferred at least 1 D and mostly preferred at least 10 D thereof.

12. Worm shaft (12) according to at least any one of the preceding claims, **characterized in that** each of the vane members (22, 22', 22", 22'") of the at least one section extending in the axial direction of the worm shaft (12) extends - as viewed from the cross section of the shaft bar (20) - over the same angular distance of the circumferential surface of the shaft bar (20), with preferentially the section extending in the axial direction of the worm shaft (12), in which each of the vane members (22, 22', 22", 22'") extends over the same angular distance of the circumferential surface of the shaft bar (20), preferably measuring at least 0,5 D of the length of the worm shaft (12), further preferred at least 1 D and mostly preferred at least 10 D thereof.

13. Housing (10) of a mixing and kneading machine (100) for continuous treatment processes, the housing (10) comprising a hollow inner space (18), in which a worm shaft (12) according at least to any one of claims 1 to 12 at least in sections extends in an axial direction, the housing (10) further comprising a multitude of kneading members (24), which extent from the inner circumferential surface of the housing (10) into the hollow inner space (18) of the housing (10), with the kneading members (24) being arranged in at least two rows, which extend in an axial direction over at least one section of the inner circumferential surface of the housing (10).

14. Mixing and kneading machine (100) for continuous treatment processes, like for the preparation of granulated polymer, polymeric extruded profiles or polymeric moldings comprising a housing (10) according to claim 13.

## Revendications

1. Arbre à vis sans fin (12) pour une machine à mélanger et malaxer (100), notamment pour des processus de traitement continué, comprenant un arbre sous forme de barre (20) muni d'une section transversale circulaire, sur la surface circonférentielle de celui-ci sont agencés des éléments de profil d'aile (22, 22', 22", 22'") espacés les uns des autres, qui s'étendent de la surface circonférentielle de l'arbre sous forme de barre (20) vers l'extérieur,
dont les éléments de profil d'aile (22, 22', 22", 22"') sont agencés sur la surface circonférentielle de l'arbre sous forme de barre (20), au moins dans une section s'étendant en direction axiale de l'arbre à vis sans fin (12), en deux rangées (40, 40'), qui s'étendent en direction axiale de l'arbre à vis sans fin (12), **caractérisé en ce que** ladite section, qui s'étend en direction axiale de l'arbre à vis sans fin (12) ne comprend d'autres éléments de profil d'aile que ceux-ci agencés dans les deux rangées,
chacun des éléments de profil d'aile (22, 22', 22", 22"') de ladite section, qui s'étend en direction axiale de l'arbre à vis sans fin (12) couvre - comme vue en coupe transversale de l'arbre sous forme de barre (20) - un écart angulaire de 20° à 160° ou au moins de 160°
et ladite section, qui s'étend en direction axiale de l'arbre à vis sans fin (12), dont chacun des éléments de profil d'aile (22, 22', 22", 22"') couvre l'écart angulaire susmentionné de la surface circonférentielle de l'arbre sous forme de barre (20), est égal au moins à 0,2 D da la longueur de l'arbre à vis sans fin (12), dont D est le diamètre de l'arbre à vis sans fin (12).

2. Arbre à vis sans fin (12) selon la revendication 1, **caractérisé en ce que** les éléments de profil d'aile (22, 22', 22", 22"') s'étendent à partir de la surface circonférentielle de l'arbre sous forme de barre (20) d'une manière radiale vers l'extérieur.

3. Arbre à vis sans fin (12) selon la revendication 1 ou 2, **caractérisé en ce que** les éléments de profil d'aile (22, 22', 22", 22"') des deux rangées (40, 40') sur la surface circonférentielle de l'arbre sous forme de barre (20) se trouvent face à face - comme vue en coupe transversale de l'arbre sous forme de barre (20) -.

4. Arbre à vis sans fin (12) selon au moins l'une quelconque des revendications précédentes, **caractérisé en ce que** chacun des éléments de profil d'aile (22, 22', 22", 22"') de ladite au moins une section, qui s'étend en direction axiale de l'arbre à vis sans fin (12), comprend une extension longitudinale L qui se prolonge en un angle allant de 45° à 135°, de préférence de 60° à 120°, plus préféré de 80° à 100°, particulièrement préféré de 85° à 95° et le plus préférée de 90° par rapport à la direction axiale de l'arbre à vis sans fin (12).

5. Arbre à vis sans fin (12) selon au moins l'une quelconque des revendications précédentes, **caractérisé en ce que** chacun des éléments de profil d'aile (22, 22', 22", 22'") de ladite au moins une section, qui s'étend en direction axiale de l'arbre à vis sans fin (12), en vue de dessus, comprend une surface circonférentielle extérieure elliptique, ovale ou biconvexe, dont de préférence ladite section, qui s'étend en direction axiale de l'arbre à vis sans fin (12), et dans laquelle chacun des éléments de profil d'aile (22, 22', 22", 22'") comprend la forme susmentionnée de la surface circonférentielle extérieure, préférentiellement est égal au moins à 0,5 D, plus préféré au moins à 1 D, et particulièrement préféré au moins à 10 D de la longueur de l'arbre à vis sans fin (12).

6. Arbre à vis sans fin (12) selon la revendication 5, **caractérisé en ce que** chacun des éléments de profil d'aile (22, 22', 22", 22"') comprend la même surface circonférentielle extérieure elliptique, ovale ou biconvexe.

7. Arbre à vis sans fin (12) selon la revendication 5 ou 6, **caractérisé en ce** chacun des éléments de profil d'aile (22, 22', 22", 22"') comprend une surface circonférentielle extérieure biconvexe avec un rapport entre la longueur L et la largeur B allant de 3 à 11, de préférence de 4 à 10, plus préféré de 5 à 9, particulièrement préféré de 6 à 8 et le plus préféré de 7 à 7,5, dont la longueur L signifie l'extension droite la plus longue de la surface circonférentielle extérieure de l'élément de profil d'aile (22, 22', 22", 22"') et la largeur B signifie l'extension droite la plus longue de la surface circonférentielle extérieure de l'élément de profil d'aile (22, 22', 22", 22"'), qui s'étend perpendiculairement par rapport à la longueur L du profil d'aile (22, 22', 22", 22"').

8. Arbre à vis sans fin (12) selon au moins l'une quelconque des revendications 5 à 7, **caractérisé en ce que** les flancs latéraux (42) de chaqu'un des éléments de profil d'aile (22, 22', 22", 22"') provenant de la direction circonférentielle de l'arbre sous forme de barre (20) s'étendent vers le haut vers la surface circonférentielle extérieure (22, 22', 22", 22"') des éléments de profils d'aile (22, 22', 22", 22"') d'une manière verticale ou sous un angle α par rapport au plan transversal de l'arbre sous forme de barre (20) allant de 1° à 60°, préférentiellement de 2° à 40°, plus préféré de 3° à 20° et particulièrement préféré allant de 4° à 10°.

9. Arbre à vis sans fin (12) selon au moins l'une quelconque des revendications précédentes, **caractérisé en ce que** le rapport entre la distance axiale A des deux éléments de profil d'aile voisins (22, 22', 22", 22"') d'une rangée (40, 40') et la largeur B d'un élément de profil d'aile (22, 22', 22", 22"') va de 0,5 à 5, préférentiellement de 0,75 à 3, plus préféré de 1 à 2, particulièrement préféré de 1,25 à 1,75 et d'une manière la plus préférée de 1,4 à 1,6, dont la largeur B signifie l'extension droite la plus longue de la surface circonférentielle extérieure de l'élément de profil d'aile (22, 22', 22", 22"'), qui s'étend perpendiculairement par rapport à la longueur L du profil d'aile (22, 22', 22", 22"'), et dont la distance axiale A des deux éléments de profil d'aile voisins (22, 22', 22", 22"') signifie la distance entre les centres C des surfaces circonférentielles extérieures des éléments de profil d'aile voisins (22, 22', 22", 22"'), dont le centre C de la surface circonférentielle extérieure d'un élément de profil d'aile (22, 22', 22", 22"') signifie le point, qui se situe au milieu de l'extension droite la plus longue L de la surface circonférentielle extérieure de l'élément de profil d'aile (22, 22', 22", 22'").

10. Arbre à vis sans fin (12) selon au moins l'une quelconque des revendications précédentes, **caractérisé en ce que** chaqu'un des éléments de profil d'aile (22, 22', 22", 22'") de ladite au moins une section, qui s'étend en direction axiale de l'arbre à vis sans fin (12), couvre - comme vue en coupe transversale de l'arbre sous forme de barre (20) - un écart angulaire de la surface circonférentielle de l'arbre sous forme de barre (20) d'au moins 170°, plus préféré d'au moins 175°, encore plus préféré de plus de 180°, et encore plus préféré de plus de 180° jusqu'à 270°, particulièrement préféré de 185° à 230°, notamment préféré de 185° à 210°, très particulièrement préféré de 190° à 200° et d'une manière la plus préférée allant de 192° à 197°, dont de préférence ladite section de l'arbre à vis sans fin (12), qui s'étend en direction axiale, dont chacun des éléments de profil d'aile (22, 22', 22", 22"') couvre l'écart angulaire susmentionné de la surface circonférentielle de l'arbre sous forme de barre (20), préférentiellement est égal au moins à 0,5 D da la longueur de l'arbre à vis sans fin (12), particulièrement préféré au moins à 1 D et d'une manière la plus préférée au moins à 10 D.

11. Arbre à vis sans fin (12) selon au moins l'une quelconque des revendications 1 à 9, **caractérisé en ce que** chaqu'un des éléments de profil d'aile (22, 22', 22", 22"') de ladite au moins une section, qui s'étend en direction axiale de l'arbre à vis sans fin (12), couvre - comme vue en coupe transversale de l'arbre sous forme de barre (20) - un écart angulaire de la surface circonférentielle de l'arbre sous forme de barre (20) allant de 45° à 135°, particulièrement préféré de 60 à 120°, encore plus préféré de 70° à 110°, très particulièrement préféré de 80° à 100° et d'une manière la plus préférée allant de 85° à 95°, dont de préférence ladite section de l'arbre à vis sans fin (12), qui s'étend en direction axiale, dont chacun des éléments de profil d'aile (22, 22', 22", 22"') couvre l'écart angulaire susmentionné de la surface circonférentielle de l'arbre sous forme de barre (20), préférentiellement est égal au moins à 0,5 D da la longueur de l'arbre à vis sans fin (12), particulièrement préféré au moins à 1 D et d'une manière la plus préférée au moins à 10 D.

12. Arbre à vis sans fin (12) selon au moins l'une quelconque des revendications précédentes, **caractérisé en ce que** chaqu'un des éléments de profil d'aile (22, 22', 22", 22"') de ladite au moins une section, qui s'étend en direction axiale de l'arbre à vis sans fin (12), couvre - comme vue en coupe transversale de l'arbre sous forme de barre (20) - le même écart angulaire de la surface circonférentielle de l'arbre sous forme de barre (20), dont de préférence ladite section de l'arbre à vis sans fin (12), qui s'étend en direction axiale, dont chacun des éléments de profil d'aile (22, 22', 22", 22"') couvre le même écart angulaire de la surface circonférentielle de l'arbre sous forme de barre (20), préférentiellement est égal au moins à 0,5 D da la longueur de l'arbre à vis sans fin (12), particulièrement préféré au moins à 1 D et d'une manière la plus préférée au moins à 10 D.

13. Boîtier (10) d'une machine à mélanger et malaxer (100) pour des processus de traitement continué, l'intérieur du boîtier (10) étant muni d'un espace intérieur creux (18), dans lequel s'étend au moins par section en direction axiale un arbre à vis sans fin (12) selon au moins l'une quelconque des revendications 1 à 12, dont une multitude d'éléments de malaxage (24) est agencés à l'intérieur du boîtier (10), qui s'étendent de la surface circonférentielle intérieure du boîtier (10) vers l'espace intérieur creux (18) du boîtier (10), dont les éléments de malaxage (24) sont agencés en au moins deux rangées, qui s'étendent dans la direction axiale à travers au moins une section de la surface circonférentielle intérieure du boîtier (10).

14. Machine à mélanger et malaxer (100) pour des processus de traitement continué, comme pour la fabrication du polymère granulé, des profils de polymère extrudés ou des articles en polymer moulé, comprenant un boîtier selon la revendication 13.
